# EUROPEAN PATENT SPECIFICATION

(11) **EP 2 177 884 B1**
(45) Date of publication and mention of the grant of the patent: **10.10.2012**
(21) Application number: 08790397.7
(22) Date of filing: 06.08.2008
(51) Int. Cl.: F23N 1/00, F23K 5/06, G01F 15/06

(54) **FLOW RATE MEASURING APPARATUS AND FLOW RATE MEASURING METHOD**
DURCHFLUSSMESSVORRICHTUNG UND DURCHFLUSSMESSVERFAHREN
DISPOSITIF DE MESURE DE DEBIT ET PROCEDE DE MESURE DE DEBIT

(30) Priority: 06.08.2007 JP 2007204327; 10.08.2007 JP 2007209122; 12.09.2007 JP 2007236830
(43) Date of publication of application: 21.04.2010
(73) Proprietor: Panasonic Corporation, Kadoma-shi Osaka 571-8501 (JP); The High Pressure Gas Safety Institute of Japan, Tokyo 105-8447 (JP)
(72) Inventor: ASANO, Kazutaka, Chuo-ku, Osaka-shi, Osaka 540-6207 (JP); YOKOHATA, Mitsuo, Chuo-ku, Osaka-shi, Osaka 540-6207 (JP); NAKAMURA, Hirozumi, Chuo-ku, Osaka-shi, Osaka 540-6207 (JP); SHIRASAWA, Tadanori, Chuo-ku, Osaka-shi, Osaka 540-6207 (JP); MIYATA, Hajime, Chuo-ku, Osaka-shi, Osaka 540-6207 (JP); ITOU, Youichi, Chuo-ku, Osaka-shi, Osaka 540-6207 (JP)
(74) Representative: Schwabe - Sandmair - Marx
(86) International application number: PCT/JP2008/002133
(87) International publication number: WO 2009/019871

(56) References cited:
- EP-A1- 2 098 833
- JP-A- 2001 272 262
- JP-A- 2003 149 027
- JP-A- 2005 257 310
- JP-A- 2007 024 753
- JP-A- 2007 024 806

## Description

### Technical Field

The present invention relates to a flow rate measuring apparatus, a flow rate measuring system, and a flow rate measuring method, capable of discriminating appliances on the basis of flow rate information of a gas or the like flowing in a flow path.

### Background Art

An appliance discriminating system has been proposed which specifies an appliance in use by detecting a variation in flow rate of gas flowing in a flow path. In the appliance discriminating system, when a new appliance is introduced into a user's home or the like, a new flow rate pattern is detected and registered (see Patent Document 1).

In addition, there is a system detecting an accurate flow rate according to an appliance by sequentially taking information of use patterns of new appliances appearing on the market even after a gas flow rate measuring apparatus is produced (see Patent Document 2).

In the system, flow rate measuring apparatuses provided in homes are connected to a service center through communication lines. When new gas appliances appear on the market, the contents of gas appliance databases are updated by the service center and the stored contents of storage means of the databases of the flow rate measuring apparatuses are updated through communication means. Accordingly, even when new gas appliances are introduced into homes, it is always possible to discriminate the appliances accurately.

However, in the configuration, it is difficult to cope promptly in a case where a new gas appliance is introduced into the home.

As an appliance used by the user, it is assumed that an appliance similar to the appliance which is already possessed and in use is additionally introduced and the plurality of appliances is used. In such a case, in the known system, when an appliance similar to the appliance already in use is additionally introduced, the flow rate pattern becomes the same. Accordingly, the same kind of appliances cannot be discriminated.

Patent Document 3 describes a gas meter capable of fetching the usage of each apparatus in a gas passage including a plurality of gas apparatuses without individually setting the flow rates or use times of the gas apparatuses. In this respect, this gas meter comprises a measuring means measuring the use flow rate and use time in use of gas, and a pattern storage means storing flow rate patterns of gas, for example, provided in a flow sensor and a microcomputer. In the microcomputer, based on the measured use flow rate and time, the corresponding flow rate pattern is retrieved and specified from the flow rate patterns stored in the pattern storage means, and the use flow rate is integrated based on the specified flow rate pattern. In the pattern storage means, when the corresponding flow rate pattern could not retrieved, the gas flow rate pattern concerned is newly stored as a flow rate pattern by combination with a certain specified gas apparatus or a plurality of specified gas apparatuses, and this stored flow rate pattern is returned as the retrieval result.

Patent Document 4 describes a gas appliance judging device capable of easily judging a using gas appliance from a detected gas flow rate. In this respect, the gas appliance judging device comprises a flow rate pattern table in which partial flow patterns separating a series of gas flow rate patterns generated in company with burning control for a plurality of gas appliances is classified for every control step, an appliance table making correspondence between gas appliances and the combination of partial flow patterns, and an appliance judging table for extracting a partial flow rate pattern matching to the gas flow rate pattern detected in a gas supply line and extracting a gas appliance matching the combination of the extracted partial flow rate patterns from the appliance table. As a using gas appliance is judged from the gas flow rate variation during the use of the gas appliance in this invention, a concept of partial flow rate pattern separating a series of complicated gas flow rate variation for every burning control step is introduced.
Patent Document 1: JP-3490064
Patent Document 2: JP-A-2007-24753
Patent Document 3: JP 2005-257310 A
Patent Document 4: JP 2003-149027 A

### SUMMARY OF THE INVENTION

The invention is defmed by the subject-matter of the independent claims. The dependent claims are directed to advantageous embodiments.

### ADVANTAGES OF THE INVENTION

Advantageously, it is provided a technique capable of discriminating a new gas appliance even when the new gas appliance having a flow rate pattern similar to that of the existing gas appliance is introduced.

Advantageously, it is provided technique capable of discriminating a plurality of appliances from flow rate information even when the same kind of new appliance is introduced.

Advantageously, a flow rate measuring apparatus includes a flow rate measuring unit that measures a flow rate of a fluid flowing in a flow path, a new event detecting unit that detects the introduction of a new appliance from the unsteady behavior of a flow rate on the basis of the flow rate measured by the flow rate measuring unit, and a transmission unit that transmits a new event signal representing the introduction of the new appliance detected by the new event detecting unit to an external reception apparatus.

Advantageously, the flow rate measuring apparatus, the new event detecting unit may detect the introduction of the new appliance from the unsteady behavior of the flow rate caused by a test operation of the new appliance at the time of introducing the new appliance using a fluid.

Advantageously, the flow rate measuring apparatus, the new event detecting unit may be provided with an appliance discriminating unit that discriminates operations of the same kind of appliances by detecting the same kind of a plurality of flow rate information in a predetermined condition.

Advantageously, it is possible definitely to interpret the introduction of a new appliance, and it is possible to perform appliance discrimination, appliance management, and the like more appropriately.

Advantageously, the introduction of the new appliance is discriminated on the basis of a specific event such as unsteady behavior, and it is possible definitely to interpret the introduction of the new gas appliance.
Therefore, even when a new gas appliance having a flow rate pattern similar to that of the existing gas appliance is introduced, the new gas appliance can be discriminated.
In addition, even when the same kind of new appliance is introduced, a plurality of appliances can be discriminated from flow rate information.

### Brief Description of the Drawings

[Fig. 1] Fig. 1 is a block diagram illustrating a fluid supply system including a gas meter according to a first embodiment of the invention.
[Fig. 2] Fig. 2 is a graph illustrating flow rate patterns of unsteady behavior (air purge) in the first embodiment
[Fig. 3] Fig. 3 is a graph illustrating flow rate patterns of unsteady behavior (air purge) in a second embodiment.
[Fig. 4] Fig. 4 is a block diagram illustrating a configuration of a fluid supply system according to a third embodiment of the invention.
[Fig. 5] Fig. 5 is a diagram illustrating an example of flow rate patterns in the third embodiment.
[Fig. 6] Fig. 6 is a diagram illustrating an example of flow rate patterns in a fourth embodiment.
[Fig. 7] Fig. 7 is a block diagram illustrating a configuration of a fluid supply system according to a fifth embodiment of the invention.
[Fig. 8] Fig. 8 is a flowchart illustrating a process sequence of a user home apparatus in the fifth embodiment.
[Fig. 9] Fig. 9 is a flowchart illustrating a process sequence of a management center apparatus in the fifth embodiment.
[Fig. 10] Fig. 10 is a diagram illustrating an example of a flow rate pattern in the fifth embodiment.
[Fig. 11] Fig. 11 is a flowchart illustrating a process sequence of a user home apparatus in a sixth embodiment.
[Fig. 12] Fig. 12 is a diagram illustrating an example of a flow rate pattern in the sixth embodiment.
[Fig. 13] Fig. 13 is a flowchart illustrating a process sequence of a user home apparatus in a seventh embodiment.

### Explanation of References

13, 14, 15: GAS APPLIANCE
19: GAS PIPELINE
20: CENTER APPARATUS
30: NETWORK
40: CO SENSOR
100: GAS METER (FLOW RATE MEASURING APPARATUS)
102: FLOW PATH
104: ULTRASONIC FLOW METER (FLOW RATE MEASURING UNIT)
106: MEASUREMENT FLOW RATE INFORMATION STORING UNIT
108: NEW EVENT DETECTING UNIT
110: TRANSMISSION/RECEPTION UNIT
116: APPLIANCE DISCRIMINATING UNIT
118: APPLIANCE FLOW RATE HISTORY INFORMATION STORING UNIT
122: FLOW PATH CUTOFF VALVE
200: USER HOME APPARATUS
201: ULTRASONIC FLOW METER
202: FLOW RATE INFORMATION STORING UNIT
203: FLOW RATE INFORMATION ANALYZING UNIT
204: APPLIANCE DISCRIMINATING UNIT
205: PROCESS UNIT
206: APPLIANCE CHARACTERISTIC INFORMATION STORING UNIT
207: COMMUNICATION UNIT
208: DISPLAY UNIT
209: CUTOFF VALVE
210: CO SENSOR
220: GAS SUPPLY PIPE
221,222,223: APPLIANCE
230: COMMUNICATION LINE
240: MANAGEMENT CENTER APPARATUS
310: USER HOME APPARATUS
311: ULTRASONIC FLOW METER
312: FLOW RATE INFORMATION STORING UNIT
313: FLOW RATE INFORMATION ANALYZING UNIT
314: PROCESS UNIT
315: PROCESS INFORMATION STORING UNIT
316: COMMUNICATION UNIT
317: DISPLAY UNIT
318: CUTOFF VALVE
320: GAS SUPPLY PIPE
321, 322,323: APPLIANCE
330: COMMUNICATION LINE
340: MANAGEMENT CENTER APPARATUS
341: COMMUNICATION UNIT
342: PROCESS UNIT
343: RECORD UNIT

### Best Mode for Carrying Out Invention

Hereinafter, embodiments of the invention will be described with reference to the drawings.

### (First Embodiment)

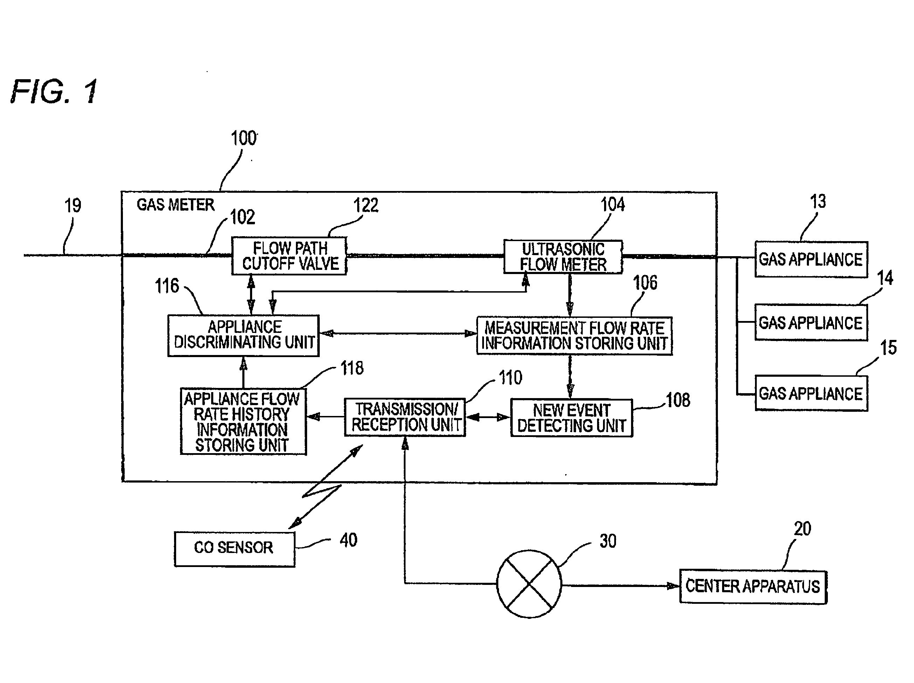

Fig. 1 shows a block diagram of a fluid supply system including a gas meter 100 as a flow rate measuring apparatus according to a first embodiment of the invention, a center apparatus 20, a network 30, and a CO sensor 40. The gas meter 100 and the CO sensor 40 are installed in a building, and they can communicate with each other, for example, by wire or wireless communication. The center apparatus 20 is provided in a gas company, a gas supplier, or a management department of a company or the like associated with them, is an apparatus for centrally managing the gas meter 100 installed in each building, and is connected to the gas meter 100 through a network 30 such as a wire, a telephone line, and the internet, so as to communicate through the network.

The gas meter 100 is provided with a flow path 102, an ultrasonic flow meter 104 as a flow rate measuring unit, a measurement flow rate information storing unit 106, a new event detecting unit 108, a transmission/reception unit 110, an appliance discriminating unit 116, and an appliance flow rate history information storing unit 118. The gas meter 100 is provided on the flow path 102, and includes a flow path cutoff valve 122 for cutting gas in case of emergency.

The ultrasonic flow meter 104 launches an ultrasonic wave to gas as a fluid flowing in the flow path 102 at a predetermined time interval (e.g., 2 seconds) to measure the flow rate, and a general ultrasonic flow meter may be used. The measurement flow rate information storing unit 106 stores target data (flow rate pattern) in which the measurement flow rate value measured by the ultrasonic flow meter 104 and the measurement time of measuring the measurement flow rate value are associated and described.

When any new event, which had not existed in a former use circumstance, occurs in a use circumstance of the gas meter 100, the new event detecting unit 108 detects such an event which had not existed in the former appliance by comparing it with the event occurring through the former appliance in the appliance discriminating unit 116 and generates a new event signal representing the new event. Particularly, in the invention, a new event of introduction of a new gas appliance, which had not hitherto existed in a use circumstance, is detected. By transmitting such a new event signal to an external monitoring apparatus or the like, it is possible to perform appropriate maintenance on the new gas appliance.

The transmission/reception unit 110 transmits and receives various kinds of information to and from the other external apparatuses, and none of the communication means and communication methods are limited whether or not they are wire or wireless. The transmission/reception unit 110 serves as a transmission unit that transmits the new event signal generated by the new event detecting unit 108 to the external apparatus such as the center apparatus 20 managed by the gas company, gas supplier, or the like through the network 30 such as the wireless and internet.

The CO sensor 40 detects CO when CO (carbon monoxide) leaks from gas appliances 13 to 15, and transmits a CO detection signal representing the detection of CO to the transmission/reception unit (serving as a reception unit receiving the CO detection signal) 110 by wireless communication (or wire communication). Of course, a transmission/reception unit for the CO detection signal may be provided separately, and the signal may be transmitted to the transmission/reception unit 110. The transmission/reception unit 110 transmits the received CO detection signal to the new event detecting unit 108.

The appliance discriminating unit 116 discriminates gas appliances using gas as a fluid with reference to the flow rate patterns stored in the measurement flow rate information storing unit 106. In this case, the appliance discriminating unit 116 compares the flow rate patterns with gas appliance characteristic flow rate history information stored in advance in the appliance flow rate history information storing unit 118 for each gas appliance, and discriminates the gas appliances using the gas from the corresponding similarity.

The gas meter 100 is connected to a gas pipeline 19 on the upstream side, and is connected to various gas appliances 13, 14, and 15 such as a gas table, a fan heater, and a floor heater on the downstream side.

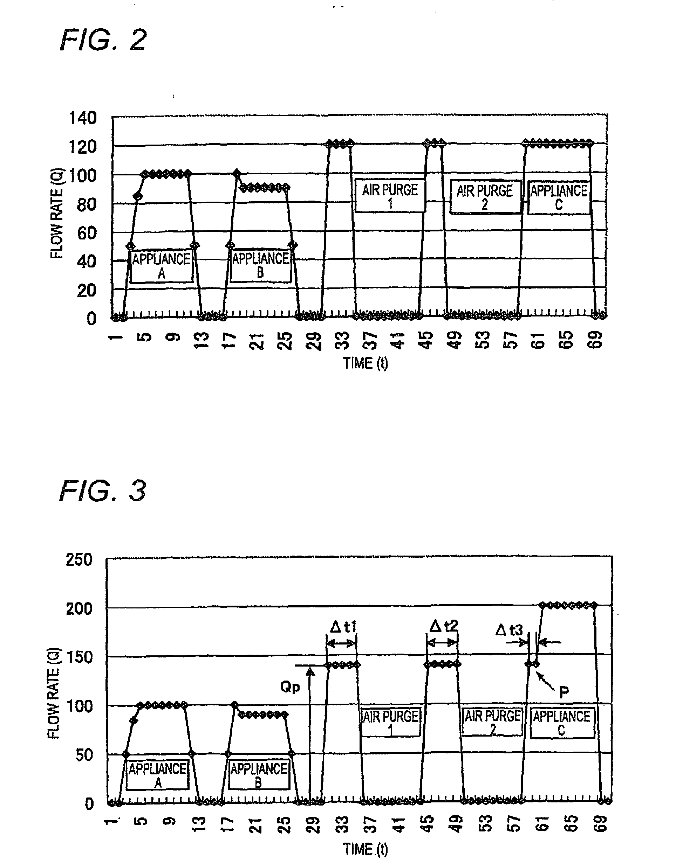

The gas meter 100 according to the embodiment detects that a new event, which had not existed in the former use circumstance, newly occurs under the use circumstance of the fluid from the flow rate pattern of the flow rate measured by the ultrasonic flow meter 104 that is the flow rate measuring unit, and notifies the external center apparatus 20. In the embodiment, as shown in the graphs of Fig. 2 and later, the ultrasonic flow meter 104 measures flow rates (absolute flow rate) Q measured with a predetermined time interval (e.g., 2 seconds), the measured flow rates are stored in the measurement flow rate information storing unit 106, and the flow rate patterns are generated as shown in the graphs. The new event is detected on the basis of such generated flow rate patterns.

As described above, in the invention, the new event detecting unit 108 of the gas meter 100 detects that the new gas appliance is introduced, from the unsteady behavior of gas caused by a test operation of the gas appliance at the time of introducing the new gas appliance. In the invention, "new (gas) appliance" includes both of a new appliance (so-called new product) brought to the market, and an appliance introduced for the first time to a use circumstance of the gas meter 100, for example, in the home. Particularly, in the embodiment, the new event detecting unit 108 detects that the new gas appliance is introduced, from the unsteady behavior of the gas and steady behavior of the new gas appliance.

Fig. 2 shows flow rate patterns at the time of using a gas appliance A, a gas appliance B, and a gas appliance C as the gas appliances 13, 14, and 15. First, after using the gas appliance A and the gas appliance B, flow rate patterns caused by the general gas appliance, that is, a flow rate pattern different (time of flowing of gas is short) from steady behavior is shown twice. The flow rate pattern reflecting such unsteady behavior is generated, for example, by air purge based on introduction of the new gas appliance.

The "air purge" is an operation of extracting the air out of a gas appliance, filling the appliance with gas, and making the gas appliance achieve a normally usable state. Accordingly, ignition of gas is not done. Basically, the air purge is operations necessarily performed at the time of introducing the gas appliance, and thus it is possible definitely to interpret the unsteady behavior.

After the flow rate pattern is generated twice, a flow rate pattern reflecting steady behavior of any new gas appliance (herein, home gas appliance C) different from the flow rate patterns of the gas appliance A and the gas appliance B is generated. The new event detecting unit 108 detects that the gas appliance C is introduced, from a combination of the two flow rate patterns reflecting the unsteady behavior patterns such as the flow rate pattern of the air purge, and the flow rate pattern reflecting the steady behavior of the gas appliance C.

The new event detecting unit 108 detects that the gas appliance C as the new gas appliance is introduced, as the new event, generates a new event signal, and transmits the new event signal to the transmission/reception unit 110. The transmission/reception unit 110 transmits the new event signal to the center apparatus 20 through the network 30. The center apparatus 20 reports the new event signal to the management department by predetermined reporting means, the management department interprets any new event that occurs and interprets that the new gas appliance is introduced, and can provide a predetermined countermeasure for management of the gas appliance, for example, updating information of the appliance flow rate history information storing unit 118 of the gas meter 100. The center apparatus 20 serves as a reception apparatus receiving the new event signal, and a communication system formed of the gas meter 100 and the reception apparatus is configured.

In the example, the new event detecting unit 108 detects that the new gas appliance is introduced, from both the unsteady behavior and the steady behavior. The purpose of such a mode is to prevent an erroneous operation, such as the new event detecting unit 108 detecting simple noise as unsteady behavior. However, if the unsteady behavior can be definitely detected, the new event detecting unit 108 may determine that a gas appliance is introduced, only by the unsteady behavior, and may generate a new event signal.

In the example, the new event detecting unit 108 detects the introduction of the new gas appliance on the basis of the number of occurrence times (total number of occurrence times) of the flow rate pattern reflecting the unsteady behavior, for example, twice unsteady behavior, but the introduction of the new gas appliance may be detected on the basis of the number of occurrence times per unit of time.

In the embodiment, it is detected that any variation occurs in a circumstance using a fluid by interpreting variation in the flow rate of the fluid, thereby notifying the outside. According to the first embodiment, it is possible definitely to interpret the introduction of the new gas appliance so as to discriminate the introduction of the new gas appliance on the basis of the specific new event such as the unsteady behavior. Particularly, when the flow rate pattern of the steady behavior of the newly introduced gas appliance C is similar to the flow rate patterns of the existing gas appliance A and gas appliance B, there is a large advantage.

### (Second Embodiment)

In the first embodiment, the new event detecting unit 108 detects the introduction of the new gas appliance by combining the basic flow rate pattern of the unsteady behavior and the flow rate pattern of the steady behavior. The second embodiment describes an example in which the introduction of the new gas appliance can be detected just by the flow rate pattern of the unsteady behavior.

In Fig. 3, the gas appliances A and B are used, air purge as a test operation of the new gas appliance C is then performed twice, and then the general operation of the gas appliance C is started. In Fig. 3, in the flow rate values, the values on the left vertical axis of two left graphs correspond to each other, and the values in the right vertical axis of three right graphs correspond to each other. In the example, the gas appliance C is a boiler, a flow rate pattern under the steady behavior (general operation) has an ignition point in a flow rate less than the maximum flow rate, such as a slow ignition point P. When ignition is smoothly made at the slow ignition point P, a fluid of the set flow rate flows and combustion is performed at the flow rate. Generally, when the ignition is not smoothly made at the slow ignition point although the gas flows, the maximum time of allowing the gas to flow continuously (longest slow ignition time) is predetermined since it is not preferable to allow the gas to flow continuously for a long time. There is a gas appliance which stops the flow of the gas after time passes. A boiler is a typical example of such an appliance. The control unit of the gas appliance performs such a control.

It is assumed that the newly introduced gas appliance is such a type of boiler. In Fig. 3, the air purges 1 and 2 are patterns (unsteady flow rate pattern) at the time of installing the boiler and performing the test operation. There is air in the appliance pipe at the time of the air purge of the test operation, and thus the first ignition is not made smoothly That is, the air flows but the ignition is not made during the maximum slow ignition time Δt1=Δt2=Δtp. Then, when the appliance pipes are filled with the gas, the gas flows at the original flow rate of the gas appliance through the slow ignition point P, as shown in the graph of the appliance C.

Accordingly, when the flow rate pattern in which the flow rate Qp continues for Δtp (=Δt1=t2) is a pattern in the test operation of a predetermined gas appliance, the flow rate pattern is stored in advance, for example, in the appliance flow rate history information storing unit 118. When such a pattern appears, the new event detecting unit 108 determines that a new gas appliance is introduced and a test operation is started, thereby detecting the introduction of the new gas appliance.

Even in this case, the new event detecting unit 108 may detect the introduction of the new gas appliance and the occurrence of steady behavior (flow rate pattern) at the general operation of the gas appliance C following the pattern of the air purge.

In the embodiment, the air purge is exemplified as the unsteady behavior in the test operation. However, the unsteady behavior in the test operation is not limited to the air purge, but includes the other phenomenon representing behavior different from the steady behavior of the flow rate at the time of the test operation. For example, after the air purge, an operation such as confirming how many times the normal ignition is made for a short time is close to the steady behavior, but the operation can be included in the unsteady behavior as a very short time operation different from normal use. In the embodiment, the flow rate is used as a physical parameter for detecting the unsteady target behavior, but the same detection can be applied to pressure.

To embody the flow rate measuring method described above, a program for executing the steps of the flow rate measuring method of the invention is stored in the new detecting unit 108 or a computer (operation device, not shown). The invention also includes a fluid supply system including the flow rate measuring apparatus, the flow rate measuring method, and a fluid (gas) supply source and using the program executed by the computer.

### (Third Embodiment)

Next, another example of a configuration of a fluid supply system will be described with reference to a third and fourth embodiment.

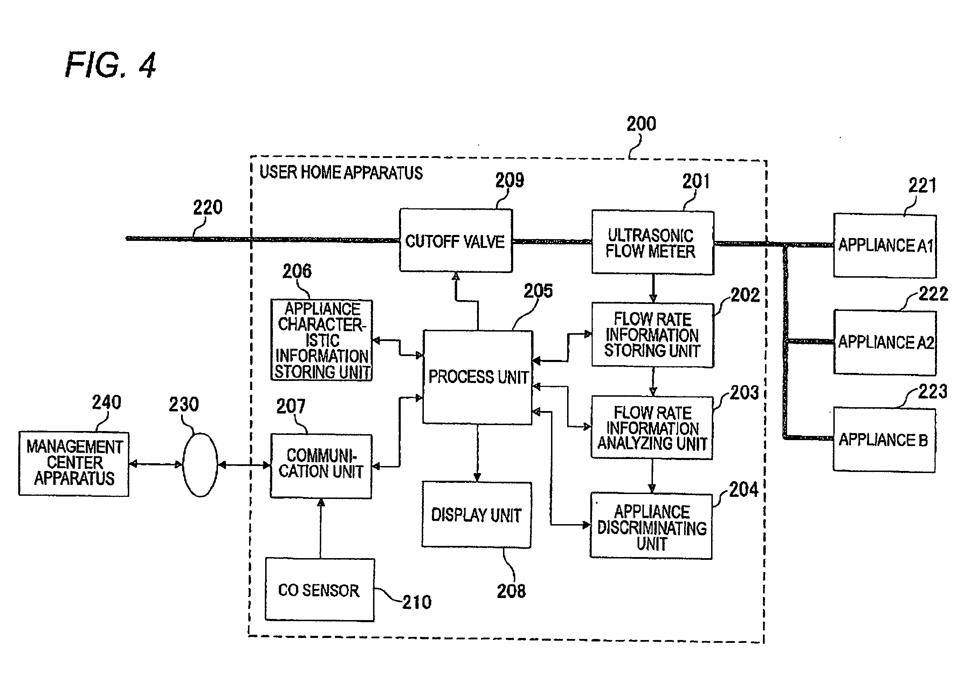

Fig. 4 is a block diagram illustrating a configuration of a fluid supply system according to the third embodiment of the invention. The embodiment shows an example of a configuration of a flow rate measuring apparatus using a gas meter installed in a user's house or the like in the fluid supply system of gas.

The fluid supply system according to the embodiment includes a user home apparatus 200 including a gas meter provided in the user's house or the like and using gas, and a management center apparatus 240 managing the user home apparatus 200. The user home apparatus 200 and the management center apparatus 240 can transmit and receive various signals or information to and from each other through a communication line 230 such as a public phone line, a mobile phone line, an optical communication line, a wire or wireless LAN, and a communication interface.

The user home apparatus 200 is provided in the way of a gas supply pipe 220 installed in the user's house or the like. An appliance A1_221, an appliance A2-222, and an appliance B223 as a plurality of gas appliances are connected to pipes on the downstream side of the gas supply pipe 220. Various appliances such as a gas table, a fan heater, and a floor heater are used as the gas appliances. The user home apparatus 200 is installed outdoors or at a predetermined position indoors. The number of connected gas appliances is not limited to the shown examples, but is random. The user's home includes an apartment house, a store, a factory, and other various facilities, as well as a general house.

The user home apparatus 200 includes an ultrasonic flow meter 201, a flow rate information storing unit 202, a flow rate information analyzing unit 203, an appliance discriminating unit 204, a process unit 205, an appliance character information storing unit 206, a communication unit 207, a display unit 208, a cutoff valve 209, and a CO sensor 210. The ultrasonic flow meter 201 is connected to the path of the gas supply pipe 220 and launches an ultrasonic wave to gas as a fluid flowing in the flow path at a predetermined internal (e.g., 2 seconds) to measure the flow rate from the ultrasonic signals, and a general ultrasonic flow meter may be used.

The flow rate information unit 202 stores flow rate information including flow rate characteristic values in which the measurement flow rates value measured by the ultrasonic flow meter 201 is associated with the measurement time when the measurement flow rate value is measured. The flow rate characteristic values include a flow rate pattern representing a characteristic of variation in flow rate obtained from a flow rate differential value per each unit of time, an absolute flow rate value, and time information such as continuation time or variation time of the flow rate. The flow rate information analyzing unit 203 analyzes the flow rate information, determines the use circumstance such as behavior of an appliance corresponding to the gas flow of gas, and detects an abnormal state. The appliance discriminating unit 204 discriminates gas appliances using gas as the fluid, on the basis of the analysis result of the flow rate information analyzed by the flow rate information analyzing unit 203.

The process unit 205 performs various processes such as a safety process corresponding to the analysis result of the flow rate information or the discriminating result of the appliance, an input/output process of information, and an operation control of the units. The appliance characteristic information storing unit 206 stores dedicated characteristic information of each gas appliance to discriminate the appliances, for each appliance. The following are used as the characteristic information: the flow rate pattern representing the steady behavior at the time of normal operation including a rising edge waveform at the time of starting, a falling edge waveform at the time of stopping, a waveform at the time of appliance operation control, and the like; the flow rate pattern representing the unsteady behavior at the time of test operation of the appliance; and the flow rate value of a stable flow rate at the time of stable operation, in the flow rate characteristic values of the flow rate information. The flow rate information analyzing unit 203, the appliance discriminating unit 204, and the process unit 205 are configured by a processor constituting a microcomputer (MICOM) or the like and an operation program, and execute a predetermined operation program to perform the corresponding process, thereby realizing the functions. The flow rate information storing unit 202 and the appliance characteristic information storing unit 206 are configured by memories such as flash ROM and RAM.

The communication unit 207 has a communication function based on wire or wireless, and is connected to the management center apparatus 240 through the communication line 230. The communication unit 207 transmits data of the flow rate information acquired from the user home apparatus 200, the information of the appliance discriminating result, or the like to the management center apparatus 240, and receives management information from the management center apparatus 240, that is, the communication unit 207 transmits and receives various kinds of information, commands, and signals to and from the management center apparatus 240.

The display unit 208 is configured by an LED, a liquid crystal display, or the like, and displays a gas flow rate, an operation state of the gas appliance, an alarm, or the like. The cutoff valve 209 is connected to the path of the gas supply pipe 220, and closes the gas supply pipe 220 on the basis of the instruction from the process unit 205, to cut the supply of gas. The CO sensor 210 detects CO when CO (carbon monoxide) leaks from gas appliances 221 to 223, and transmits a CO detection signal representing the detection of CO to the transmission/reception unit 207 by wire or wireless. The communication unit 207 transmits the received CO detection signal to the process unit 205. Of course, a transmission/reception unit for the CO detection signal may be provided separately to transmit the signal to the process unit 205.

The management center apparatus 240 performs various processes for management of the fluid supply system on the basis of the data of the flow rate information, the appliance discrimination result, the information of the process content, or the like transmitted from the user home apparatus 200. The processes performed by the management center apparatus 240 include analysis of the flow rate information for each user's home, calculation of a rate for each appliance as a special rate, a safety process when an abnormal state is detected, management of gas appliances, and the like. The management center apparatus 240 has a computer or the like including a processor and an operation program, and executes a predetermine operation program in the processor to perform the corresponding process, thereby realizing the functions.

Next, an operation of the flow rate measuring apparatus will be described. The user home apparatus 200 including the gas meter measures a flow meter by the ultrasonic flow meter 201, obtains a time-series measurement flow rate value at each predetermined time interval, and acquires a flow rate characteristic value such as a flow rate pattern calculated by associating the measurement flow rate value with the measurement time. The flow rate information including the measurement flow rate value and the flow rate characteristic value is stored in the flow rate information storing unit 202. Next, the flow rate information analyzing unit 203 analyzes the flow rate information of the gas meter. The appliance discriminating unit 204 discriminates the currently used gas appliance on the basis of the analysis result of the flow rate information. Then, various kinds of information acquired in the user home apparatus 200 such as the introduction of the new appliance, the discriminating result of the appliance, the flow rate information corresponding to each appliance, and the like are transmitted from the communication unit 207 to the management center apparatus 240 through the communication line 230.

The embodiment shows the example of the configuration capable of discriminating the user of the same appliances on the basis of the flow rate information. In the appliance discriminating unit 204, the discriminating of the same appliances is performed by determining whether or not the same appliance is additionally used according to the characteristic information about a predetermined flow rate. In this case, when the characteristic information such as the flow rate patterns, the flow rate values, and the like has been already registered and the same characteristic information as that of the appliance in use is generated, the use of the same appliances is discriminated on the basis of the flow rate pattern of the same steady behavior as that of the appliance already in use generated after the unsteady behavior at the time of the test operation, the characteristic information of the same appliance generated after the rising edge of one appliance, and the like.

First, in the third embodiment, an operation of the case of using the flow rate pattern of the unsteady behavior caused by the test operation at the time of introducing the new appliance will be described. For example, unsteady behavior of a gas flow rate caused by air purge is used as the unsteady behavior at the time of the test operation. The "air purge" is an operation of extracting the air within an appliance out of the gas appliance, filling the appliance with gas, and making the gas appliance achieve a normally usable state. Basically, the air purge is an operation necessarily performed at the time of introducing the gas appliance, and thus it is possible definitely to interpret the unsteady behavior.

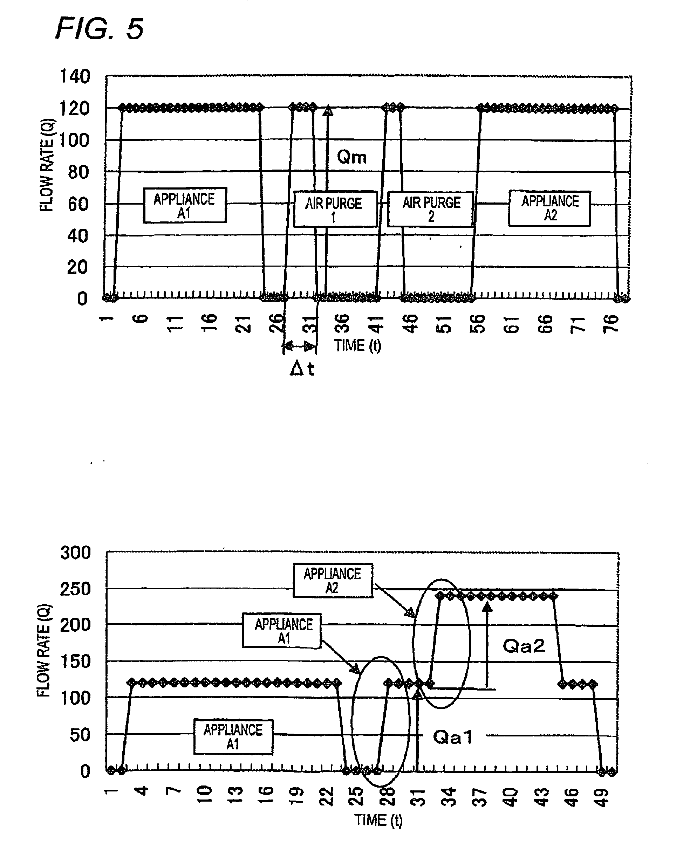

Fig. 5 is a diagram illustrating an example of the flow rate patterns in the third embodiment. Fig. 5 shows the flow rate patterns when the same kind of two appliances A1 and A2 are sequentially used. First, the appliance discriminating unit 204 detects a flow rate pattern of unsteady behavior in which the appliance A1 is used and there is no normal operation. Then, a flow rate pattern of unsteady behavior as a pulse for a short time of gas flow caused by air purge is generated twice, and the unsteady behavior is detected.

The unsteady behavior continues and then a flow rate pattern of steady behavior at the time of normal operation such as the appliance A1 is detected. In this case, the appliance discriminating unit 204 determines that the same kind of appliance A2 as the appliance A1 is introduced on the basis of the combination of the two flow rate patterns reflecting the unsteady behavior by the air purge and the flow rate pattern reflecting the steady behavior such as the appliance A1, and detects the additional use of the same kind of the second appliance.

The flow rate pattern of the unsteady behavior includes a pattern of variation in flow rate, a flow rate value such as a maximum flow rate (Qm), a continuation time (Δt), and the like, and the unsteady behavior may be detected using them. The number of occurrence times of the flow rate patterns of the unsteady behavior or occurrence frequency based on a occurrence rate (the number of occurrence times per unit of time) may be used. The unsteady behavior caused by the test operation is not limited to the air purge, but includes the other phenomenon representing behavior different from the steady behavior of the flow rate at the time of the test operation.

When the introduction of the same appliance is detected by the appliance discriminating unit 204 and the use of the same appliances is discriminated, the process unit 205 registers the characteristic information of the newly introduced appliance. That is, as the characteristic information for each appliance, the process unit 205 stores the information representing that the same kind of appliance A2 as the appliance A1 is introduced and the plurality of appliances A are used, in the appliance characteristic information storing unit 206.

The introduction of the same kind of new appliance or a plurality of appliance information including the flow rate information or the like is transmitted for notice from the user home apparatus 200 to the management center apparatus 240 through the communication line 230 by the communication unit 207, and it is possible to manage the gas appliances in the user's home through the management center apparatus 240. In this case, the information transmitted from the user home apparatus 200 is utilized for various processes, such as interpreting or confirming the gas use state, calculating a rate according to appliances, maintenance such as regular inspection, and a safety process at the abnormal time such as leakage of gas or breakdown of an appliance.

As described above, according to the third embodiment, even when the same kind of new appliance is introduced, it is possible to discriminate the use of the plurality of appliances on the basis of the detection the flow rate patterns of the unsteady behavior and the subsequent steady behavior.

### (Fourth Embodiment)

Subsequently, the fourth embodiment describes an operation in the case of using the same kind of a plurality of characteristic information by the flow rate patterns or the like. In the embodiment, as an example, a rising edge waveform of the flow rate pattern or the like at the time of start of the appliance is used as the same kind of a plurality of characteristic information.

Fig. 6 is a diagram illustrating an example of the flow rate pattern according to the fourth embodiment. Fig. 6 shows flow rate patterns when two appliances of the same kind of appliance A1 and appliance A2 are complexly used. First, the appliance A1 is used and normally operated, and the appliance discriminating unit 204 detects a flow rate pattern of steady behavior from start to stop.

Then, a rising edge waveform of the appliance A1 is detected, and subsequently a rising edge waveform of the appliance A2 having the same characteristic as that of the appliance A1 is detected. In this case, the appliance discriminating unit 204 determines that the appliance A1 and the same kind of appliance A2 are operated on the basis of two pieces of the continuously generated same characteristic information (herein, rising edge waveforms), and detects the complex use of the same two appliances.

The rising edge waveforms of the flow rate pattern surrounded by the ovals shown in Fig. 6 and the flow rate (stable flow rate Qal=Qa2) at the time of stable operation after the appliances are started, are used as the characteristic information, and the overlapping of the same kind of characteristic information is detected, thereby discriminating the operations of the same kind of appliances. The rising edge waveform at the time of starting, the difference in stable flow rate, the falling edge wave form at the time of stopping, the flow rate pattern of increase or decrease in flow rate at the time of the operation control of the appliance may be used.

The use of the same kinds of appliances or a plurality of appliance information including the flow rate information thereof or the like is transmitted for notice from the user home apparatus 200 to the management center apparatus 240 that is the external apparatus through the communication line 230 by the communication unit 207, and the gas appliance of the user's home may be managed by the management center apparatus 240. In this case, the information transmitted from the user home apparatus 200 is utilized for various processes, such as interpreting or confirming the gas use state, calculating a rate according to appliances, maintenance such as regular inspection of gas appliances, and a safety process at the abnormal time such as leakage of gas or breakdown of an appliance.

As described above, according to the fourth embodiment, even when the same kind of new appliance is introduced, it is possible to discriminate the use of the plurality of appliances in the case of the complex parallel operation by detecting the same kind of the plurality of overlapping characteristic information.

In the third and fourth embodiments, when the user home apparatus 200 discriminates the introduction of the same kind of appliances, the discrimination may be performed by detecting operations of the same kind of appliances a plurality of times. Accordingly, there may be a fault at the first discrimination, but it is possible to raise accuracy of the discriminating results of the same kind of appliances by the discrimination of the plurality of times. When the discriminating results of the same kind of appliances are reported to the management center apparatus 240, the discriminating process may be performed a plurality of times to accumulate the discriminating results and then the plurality of discriminating results may be reported. Accordingly, it is possible to improve reliability of the reported information of the discriminating results.

To embody the flow rate measuring method described above, a program for executing the steps of the flow rate measuring method of the invention is stored in the flow rate information analyzing unit 203, the appliance discriminating unit 204, the process unit 205, the management center apparatus 240, or a computer (operation device, not shown) realizing such functions in the user home apparatus 200. The invention includes a fluid supply system including a fluid (gas) supply source using the flow rate measuring apparatus, the flow rate measuring method, and the flow rate measuring program.

### (Fifth Embodiment)

However, in the known system, for example, when discriminating a new appliance, a safety process concerning abnormality or the like at the time of using, rate calculation for each appliance, and the like is performed and all the processes are performed by the flow rate measuring apparatus such as a gas meter installed in the user's house, it has a large process load. Generally, the flow rate measuring apparatus installed in the user's house has limited process capability or storage capacity. Accordingly, the flow rate measuring apparatus cannot perform a complex process against the large process load and may cause a trouble on accuracy in discrimination. On the contrary, when the center performs all the processes, the amount of data transmitted from the flow rate measuring apparatuses in the user's homes to the center is increased and a communication load becomes large.

Another example of additional configurations of a fluid supply system in the fifth to seventh embodiments will be described. In the example, when discriminating an appliance, a safety function, an appliance rate function, and the like is performed on the basis of the flow rate information, it is possible to reduce the load applied to each apparatus, and it is possible to perform efficiently a more appropriate process of the overall system.

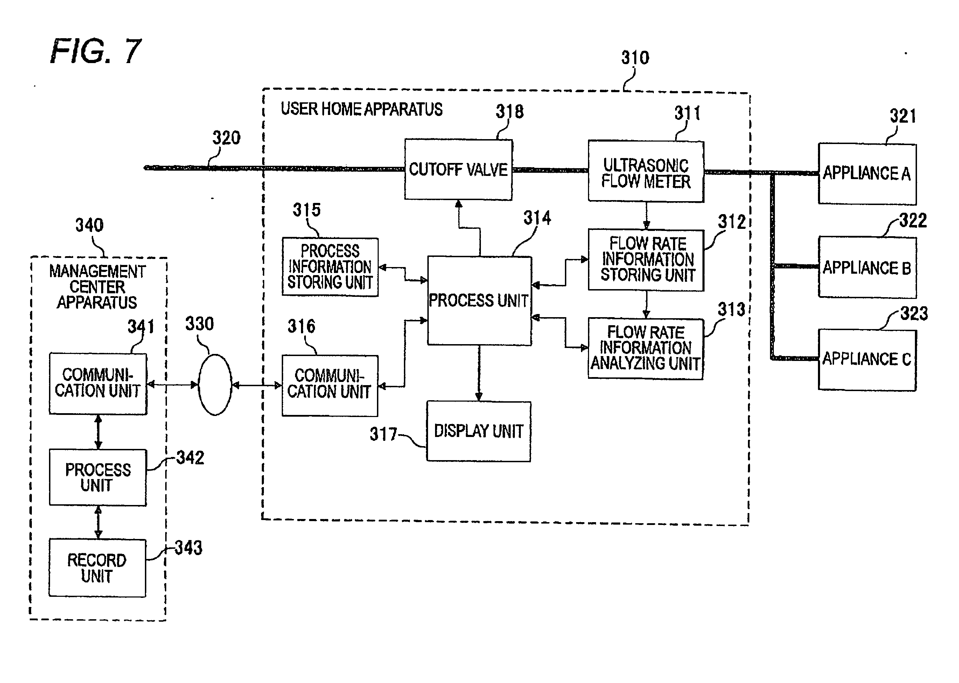

Fig. 7 is a block diagram illustrating a configuration of the fluid supply system according to the fifth embodiment. The embodiment describes an example of a flow rate measuring system using a gas meter installed in the user's house and a management center apparatus managing supply of gas, in a fluid supply system using gas.

In the fluid supply system using gas shown in Fig. 7, the flow rate measuring system according to the embodiment includes a management center apparatus 340 managing a gas supply path 320, and a user home apparatus 310 including a gas meter for gas installed in the user's house or the like. The management center apparatus 340 and the user home apparatus 310 are connected through a communication line 330 such as a public phone line, a mobile phone line, an optical communication line, a wire or wireless LAN, and other a communication interface, and can transmit and receive various signals and information to and from each other.

The user home apparatus 310 is installed in the way of the gas supply pipe 320 installed in the user's home. An appliance A321, an appliance B322, and an appliance C323 as a plurality of gas appliances are connected to pipes on the downstream side of the gas supply pipe 320, The user home apparatus 310 is installed at a predetermined position indoors or outdoors. The number of connected gas appliances is not limited to the shown example, but is random. The user home includes an apartment house, a store, a factory, and other various facilities, as well as a general house.

The user home apparatus 310 includes an ultrasonic flow meter 311, a flow rate information storing unit 312, a flow rate information analyzing unit 313, a process unit 314, a process information storing unit 315, a communication unit 316, a display unit 317, and a cutoff valve 318. The ultrasonic flow meter 311 is connected to the path of the gas supply pipe 320 and launches an ultrasonic wave to gas as a fluid flowing in the flow path at a predetermined interval (e.g., 2 seconds) to measure the flow rate, and a general ultrasonic flow meter may be used.

The flow rate information storing unit 312 stores flow rate information including flow rate characteristic values in which the measurement flow rates value measured by the ultrasonic flow meter 311 is associated with the measurement time when the measurement flow rate value is measured. The flow rate characteristic values include a flow rate pattern representing a characteristic of variation in flow rate obtained from a flow rate differential value per each unit of time, an absolute flow rate value, and time information such as continuation time or variation time of the flow rate. The flow rate information analyzing unit 313 analyzes the flow rate information, determines the use circumstance such as behavior of an appliance corresponding to the gas flow of gas, and detects an abnormal state.

The process unit 314 performs various processes such as a calculation process of the flow rate information, a determination process of the analysis result of the flow rate information, and an operation control of the units. The process information storing unit 315 stores various kinds of information such as input information or setting information such as data and flags using the process unit 314, and output information of the process results. The flow rate information analyzing unit 313 and the process unit 314 are configured by a processor constituting a microcomputer (MICOM) or the like and an operation program, and execute a predetermined operation program to perform the corresponding process, thereby realizing the functions. The flow rate information storing unit 312 and the process information storing unit 315 are configured by memories such as flash ROM and RAM. In the embodiment, the ultrasonic flow meter 311 and the flow rate information storing unit 312 function as a flow rate measuring unit, the flow rate information analyzing unit 313 functions as a first flow rate information analyzing unit, and the process unit 314 functions as a first process unit.

The communication unit 316 has a communication function based on wire or wireless, and is connected to the management center apparatus 340 through the communication line 330. The communication unit 316 transmits data of the flow rate information acquired from the user home apparatus 310, the process content information, or the like to the management center apparatus 340, and receives management information from the management center apparatus 340, that is, the communication unit 316 transmits and receives various kinds of information, commands, and signals to and from the management center apparatus 340.

The display unit 317 is configured by an LED, a liquid crystal display, or the like, and displays a gas flow rate, an operation state of the gas appliance, an alarm, or the like. The cutoff valve 318 is connected to the path of the gas supply pipe 320, and closes the gas supply pipe 320 on the basis of the instruction from the process unit 314, to cut the supply of gas.

The management center apparatus 340 is provided with a computer or the like, and includes a communication unit 341, a process unit 342, and a record unit 343. The communication unit 341 has a communication function based on wire or wireless, is connected to the user home apparatus 310 through the communication line 330, and transmits and receives various kinds of information, commands, and signals to and from the management center apparatus 310.

The process unit 342 performs various processes using the data of the flow rate information, the information of the process contents, and the like transmitted from the user home apparatus 310. The processes performed by the process unit 342 include analysis of flow rate information for each user's home, calculation of a rate for each appliance as a special rate, a safety process when an abnormal state is detected, management of gas appliances, and the like. The record unit 343 records various kinds of information such as the information transmitted from the user home apparatus 310, input/output information about the processes of the process unit 342, and management information of the system. The process unit 342 includes a processor and an operation program constituting a computer or the like, and executes a predetermined operation program in the processor to perform the corresponding process, thereby realizing the functions. The process unit 342 functions as a second flow rate information analyzing unit and a second process unit.

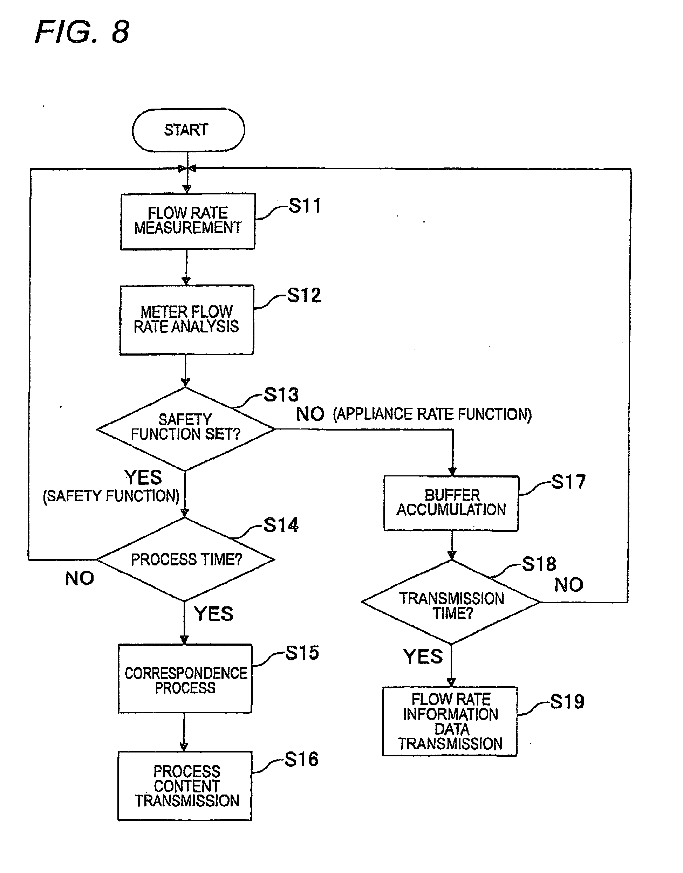

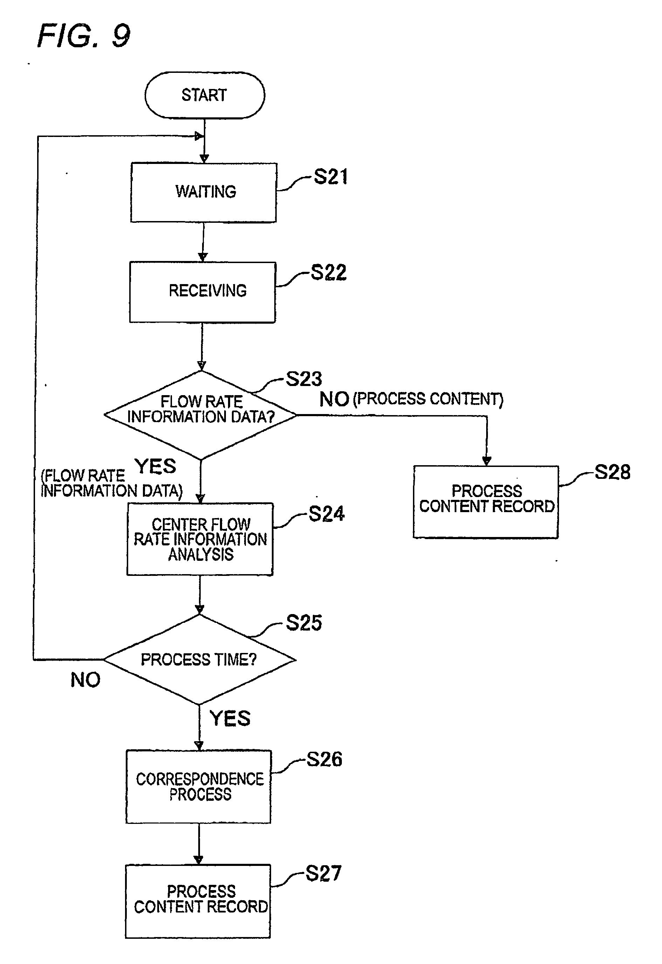

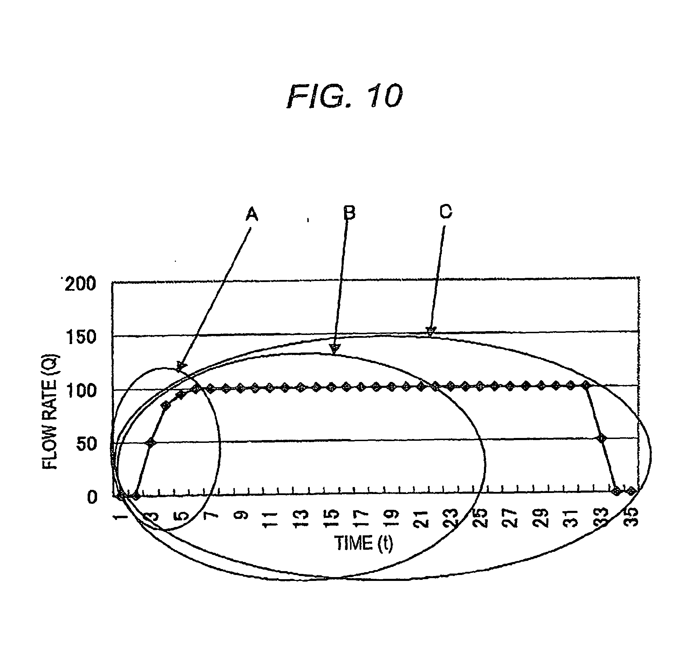

First, the fifth embodiment describes an operation of the flow rate measuring system in which the user home apparatus 310 divides the flow rate information analysis and the corresponding process according to whether or not a safety function is set. Fig. 8 is a flowchart illustrating a process sequence of the user home apparatus according to the fifth embodiment, Fig. 9 is a flowchart illustrating a process sequence of the management center apparatus according to the fifth embodiment, and Fig. 10 is a diagram illustrating an example of a flow rate pattern in the fifth embodiment In the embodiment, an example of performing a process on the basis of the flow rate information at the time of using an appliance such as a fan heater.

As shown in Fig. 8, the user home apparatus 310 including the gas meter first measures a flow rate by the ultrasonic flow meter 311, obtains a time-series measurement flow rate value at each regular time interval, and obtains a flow rate characteristic value such as a flow rate pattern calculated by associating the measurement flow rate values and the measurement times (Step S11). The flow rate information including the measurement flow rate values and the flow rate characteristic values is stored in the flow rate information storing unit 312. The flow rate information analyzing unit 313 analyzes the flow rate information obtained by the gas meter (Step S12). In this case, an appliance corresponding to the flow rate of gas is discriminated using the flow rate pattern from start to end of an appliance such as a fan heater. The appliance in use is discriminated, for example, what appliance is used, according to the characteristic of a part A (rising edge) in the flow rate pattern shown in Fig. 10.

The process unit 314 uses setting information such as flags stored in the process information storing unit 315 as a discriminating indicator, and determines whether or not the user home apparatus 310 is set to perform a safety function (Step S13). In the setting information such as the flags stored in advance for setting the gas meter of the user home apparatus 310, it is set whether or not the safety process is to be performed at the abnormal time or the like as the safety function. That is, various operations are set such as the setting for performing the safety function in the gas meter, the setting for performing only the flow rate measurement and no safety function, or the setting for performing the appliance rate function of performing a rate calculating process according to appliances using the center apparatus, and the setting information is stored. In the case of the safety function, the discriminating is required to be promptly performed, and thus it is preferable to perform the process by the user home apparatus 310. In the case of the appliance rate function, the promptitude of the discriminating is not required, and thus it is preferable to perform the process by the management center apparatus 340 in consideration of the process load or the like.

In the case of the setting of performing the safety function (Step S 13: Yes), the process unit 314 subsequently determines whether or not it is a process time (Step S 14). As an indicator of the determination whether or not it is the process time, a discriminating indicator is determined in advance, for example, determination based on only a rising edge of the appliance or determination considering behavior thereafter. In the embodiment, it is assumed that the determination is performed only by the rising edge. In the analysis of the flow rate information of the gas meter in Step S12, it is determined that it is the process time by the time when the rising edge (flow rate pattern A in Fig. 10) of the appliance is analyzed. When it is determined that it is not the process time in Step S 14, the process returns to Step S11 and the processes of Step S11 to S14 are repeated.

When it is determined that it is the process time in Step S14, the process unit 314 performs the corresponding process (Step S15). In the example of the flow rate pattern shown in Fig. 10, it is determined as a rising edge of the fan heater, it is not a sudden rising edge such as leakage. Accordingly, the safety function is not particularly necessary, and the safety process as the corresponding process is not performed. Meanwhile, for example, when an abnormal state is detected from the acquired flow rate pattern and it is necessary to perform the safety function, the corresponding safety process is performed according to the state. As the safety process in safety, a process is performed, for example, a cutoff signal is output to the cutoff valve 318 to cut off the gas supply, an alarm signal is output to the display unit 318 to notify the user by state display or alarm display of the abnormal state, or a safety signal notifying the management center apparatus 340 of the occurrence of the abnormality.

The process unit 314 transmits the process contents to the management center apparatus 340 through the communication unit 316 (Step S16). In the example of the flow rate pattern shown in Fig. 10, the rising edge of the fan heater is discriminated, and the fact that it is not leakage is transmitted. When the safety process is performed as the corresponding process of the safety function, the contents of the safety process are transmitted.

In the determination of Step S13, in the case of the setting of performing the appliance rate function (Step S13: No), the process unit 314 accumulates the flow rate information in the process information storing unit 315 or a buffer of the communication unit 316 (Step S 17), and determines whether or not it is a transmission time (Step S18). It is determined whether or not it is the transmission time using, for example, an elapsed time, as an indicator of the determination whether or not it is the transmission time, at each predetermined time. When it is determined that it is not the transmission time in Step S18, the process returns to Step S11 and the same processes of Step S11 to S18 are repeated. When it is determined that it is the transmission time in Step S18, the process unit 314 transmits the flow rate information data to the management center apparatus 340 through the communication unit 316 (Step S19).

Next, as shown in Fig. 9, the management center apparatus 340 waits for communication from the user home apparatus 310 through the communication unit 341 (Step S21), and receives the transmitted data or the like from the user home apparatus 310 through the communication unit 341 (Step S22). When the information is received, the process unit 342 determines whether the received information is flow rate information data or information of the process contents (Step S23). When the information of the process contents is received, the process contents are recorded in the record unit 343 (Step S28).

When it is determined that the flow rate information data is received in Step S23, the process unit 342 analyzes the flow rate information by the management center apparatus (Step S24).
In this case, the management center apparatus 340 analyzes the flow rate information to perform the corresponding process of the appliance rate function, and discriminates the flow rate pattern representing a use circumstance according to an appliance. In the example shown in Fig. 10, the behavior to the part B is first analyzed, and a continuous operation of the heater is confirmed.

Then, the process unit 342 determines whether or not it is a process time (Step S25). As an indicator of the determination whether or not it is the process time, it is determined whether or not an appliance is stopped on the basis of, for example, a flow rate pattern. Herein, it is determined that it is the process time by the time when the rising edge (flow rate pattern C in Fig. 10) of the appliance in the analysis of the flow rate information performed by the management center apparatus in Step S24. When it is determined that it is not the process time in Step S25, the process returns to Step S21 and the same processes of Step S21 to S25 are repeated.

When it is determined that it is the process time in Step S25, the process unit 342 performs the corresponding process (Step S26). In the example shown in Fig. 10, an accumulated flow rate and a rate corresponding thereto are calculated on the basis of the whole flow pattern from the rising edge to the falling edge of the part C. Then, the process unit 342 records the process contents of the appliance rate calculation performed as the corresponding process of the appliance rate function, in the record unit 343 (Step S27).

As described above, according to the fifth embodiment, the analysis of the flow rate information or the process related thereto, such as the safety function and the appliance rate function, can be appropriately divided into the user home apparatus and the gas meter, by the setting of the gas meter. Accordingly, it is possible to reduce the load in each apparatus, and it is possible to perform efficiently the appropriate process in the whole system. In addition, it is possible to improve a verification percentage or a process speed in analysis of the flow rate information, and it is possible to improve reliability of the corresponding process such as the appliance discrimination, the safety process, and the appliance rate process.

### (Sixth Embodiment)

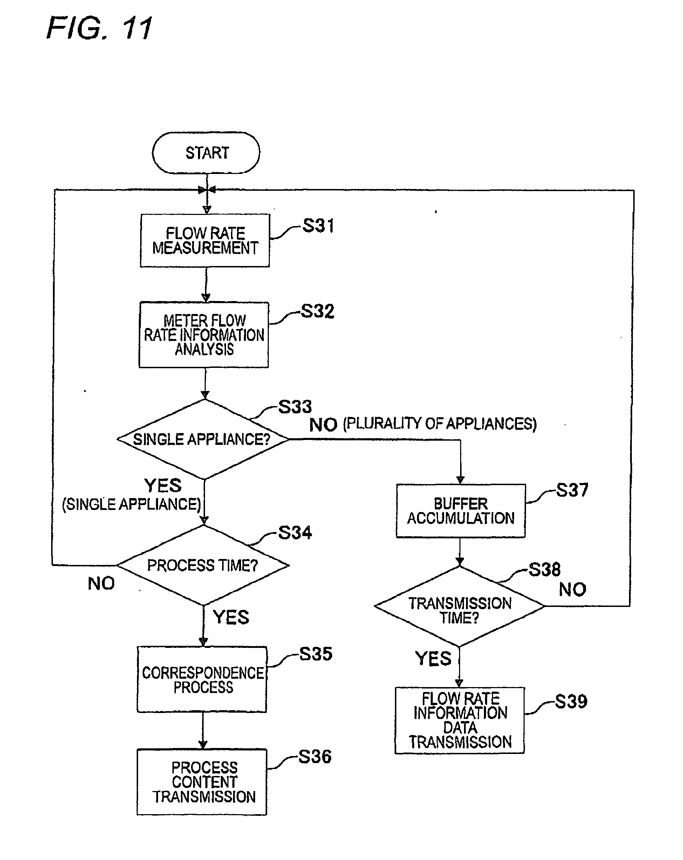

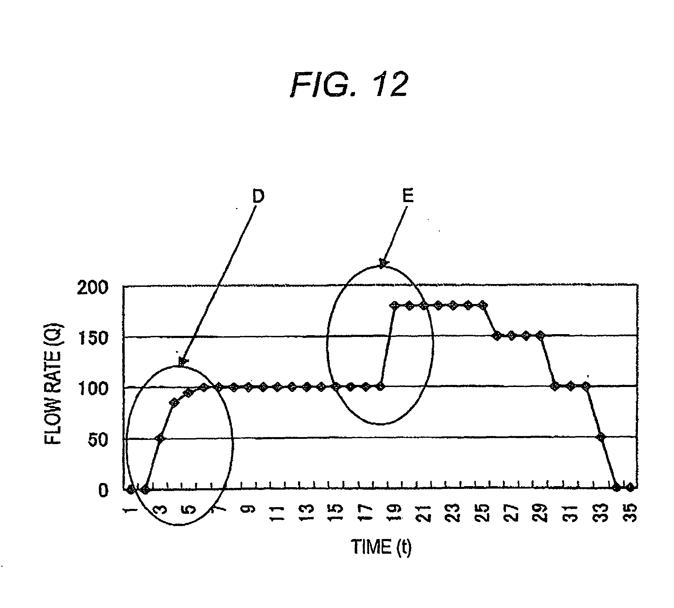

Next, a sixth embodiment describes an operation of a flow rate measuring system dividing processes according to whether or not an operating appliance is a single appliance. Fig. 11 is a flowchart illustrating a process sequence of a user home apparatus according to the sixth embodiment, and Fig. 12 is a diagram illustrating an example of a flow rate pattern according to the sixth embodiment. In the embodiment, an example of performing a process on the basis of flow rate information at the time of using a plurality of appliances such as a fan heater and a gas table is described. Parts different from those of the fifth embodiment are mainly described, and the same processes are not repeatedly described.

In Fig. 11, the user home apparatus 310 including the gas meter calculates a flow rate characteristic value such as a flow rate pattern on the basis of measurement flow rate value measured by the ultrasonic flow meter 311, acquires flow rate information including the measurement flow rate value or the flow rate characteristic value, and stores the information in the flow rate information storing unit 312 (Step S31). The flow rate information analyzing unit 313 analyzes the flow rate information acquired by the gas meter (Step S32). Then, the process unit 14 determines whether it is an operation state of a single appliance or an operation state of a plurality of appliances on the basis of the flow rate pattern (Step S33). For example, in the flow rate pattern shown in Fig. 12, when a part D (rising edge) coincides with a predetermined flow rate pattern (e.g., fan heater), it is determined that it is the operation of the single appliance. When a part E (additional new rising edge) occurs, it is determined that a plurality of appliances operate.

When it is determined that the single appliance operates in Step S33 (single appliance operation), a burden of discrimination analysis of the flow rate information is light and the user home apparatus 310 can perform the discrimination analysis. Accordingly, in this case, the process is performed by the user home apparatus 310. That is, in Step S35 the process unit 314 performs the corresponding process, and in step S36 the process contents are transmitted to the management center apparatus 340 through the communication unit 316. The corresponding process in the user home apparatus 310 includes analysis of flow rate information or a process related thereto, such as the discriminating of appliances in use, a safety process, and an appliance rate process.

When the plurality of appliances operate (complex appliance operation), a burden of discrimination analysis of the flow rate information is heavy and the discrimination analysis is performed by the management center apparatus 340. In this case, the flow rate information is accumulated in a buffer (Step S37), the process unit 314 determines whether or not it is a transmission time (Step S38), and the flow rate information data is transmitted to the management center apparatus 340 through the communication unit 316 at the transmission time (Step S39). The management center apparatus 340 receives the flow rate information data transmitted from the user home appliance 310, analyzes the received flow rate information, and performs various corresponding processes. That is, analysis of the flow rate information or a process related thereto is performed, such as discriminating of appliances, a safety process, and an appliance rate process.

Even in the case of the operation of the single appliance, it may be difficult for the user home apparatus 310 to perform the analysis of the flow rate pattern or the discriminating of the appliance. In such a case, the flow rate information may be transmitted to the management center apparatus 340 to perform the analysis of the flow rate pattern or the corresponding process thereafter in the management center apparatus 340.

As described above, according to the sixth embodiment, in the case of the signal appliance operation and the complex operation, the analysis of the flow rate information or the process related thereto can be performed by appropriately dividing them into the gas meter of the user home apparatus and the management center apparatus, according to circumstances. Accordingly, it is possible to reduce the load in each apparatus, and it is possible to perform efficiently the appropriate processes in the whole system. In addition, it is possible to improve a verification percentage or a process speed in analysis of the flow rate information, and it is possible to improve reliability of the corresponding processes such as the appliance discriminating, the safety process, and the appliance rate process.

### (Seventh Embodiment)

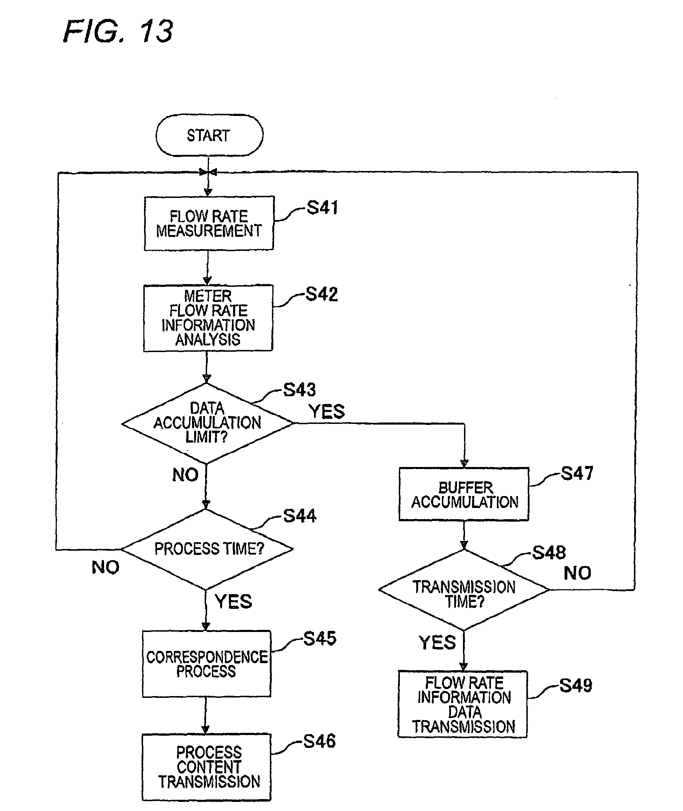

Next, a seventh embodiment describes an operation of a flow rate measuring system dividing processes according to the amount of data which can be accumulated by the user home apparatus 310. Fig. 13 is a flowchart illustrating a process sequence of a user home apparatus according to the seventh embodiment. Parts different from those of the fifth embodiment are mainly described, and the same processes are not repeatedly described.

In Fig. 13, the user home apparatus 310 including the gas meter calculates a flow rate characteristic value such as a flow rate pattern on the basis of measurement flow rate value measured by the ultrasonic flow meter 311, acquires flow rate information including the measurement flow rate value or the flow rate characteristic value, and stores the information in the flow rate information storing unit 312 (Step S41). The flow rate information analyzing unit 313 analyzes the flow rate information acquired by the gas meter (Step S42). Then, the process unit 314 determines whether or not the amount of accumulated data of the flow rate information in the flow rate information storing unit 312 is within a predetermined range (limit or not) (Step S43). The gas meter has a limit to data accumulation capacity, and thus the process is divided into the user home apparatus 310 and the management center apparatus 340 according to the amount of accumulated data.

When it is determined that the amount of accumulated data of the flow rate information is within the predetermined range (within the limit) in Step S43 and the gas meter of the user home apparatus 310 can perform the discriminating analysis of the flow rate information, the user home apparatus 310 performs the process. That is, in Step S45 the process unit 314 performs the corresponding process, in Step S46 the process contents are transmitted to the management center apparatus 340 through the communication unit 316. The corresponding process in the user home apparatus 310 includes analysis of flow rate information or a process related thereto, such as discriminating appliances in use, a safety process, and an appliance rate process.

When the amount of accumulated data of the flow rate information is over the predetermined range (over the limit), the flow rate information is transmitted to the management center apparatus 340 and the discrimination analysis of the flow rate information is performed by the management center apparatus 340. In this case, the flow rate information is accumulated in a buffer (Step S47), the process unit 314 determines whether or not it is a transmission time (Step S48), and the flow rate information data is transmitted to the management center apparatus 340 through the communication unit 316 at the transmission time (Step S49). The management center apparatus 340 receives the flow rate information data transmitted from the user home appliance 310, analyzes the received flow rate information, and performs various corresponding processes. That is, analysis of the flow rate information or a process related thereto is performed, such as discriminating appliances, a safety process, and an appliance rate process.

In the seventh embodiment, the process is performed by the user home apparatus 310 in the range in which the data can be accumulated, irrespective of the single operation or complex operation of the appliances. When the amount of accumulated data is over the limit, the process is performed by the management center apparatus 340. In this case, a plurality of process related to the safety function, the appliance rate function, and the like may be performed in one apparatus to be mixed within a permissible range.

As described above, according to the seventh embodiment, the analysis of the flow rate information or the process related thereto can be performed by appropriately dividing them into the gas meter of the user home apparatus and the management center apparatus according to situations on the basis of whether or not the amount of accumulated data of the flow rate information is over the predetermined amount. Accordingly, it is possible to reduce the load in each apparatus, and it is possible to perform efficiently the appropriate processes in the whole system. In addition, it is possible to improve a verification percentage or a process speed in analysis of the flow rate information, and it is possible to improve reliability of the corresponding process such as the appliance discriminating, the safety process, and the appliance rate process.

To embody the flow rate measuring system and the flow rate measuring method described above, a program for executing the steps of the flow rate measuring method of the invention is stored in the flow rate information analyzing unit 313 and the process unit 314 in the user home apparatus 310, the process unit 342 in the management center apparatus 340, or a computer (operation device, not shown) realizing such functions.

The embodiments of the invention have been described above, the invention is not limited to the configurations described in the embodiments, and modifications and applications made by those skilled in the art on the basis of the description of the specification and the known techniques are prescribed by the invention.

The invention has been described in detail or with reference to the specific embodiment, but it is obvious for a person skilled in the art to add various modifications or amendments.

### Industrial Applicability

According to the invention, it is possible definitely to interpret the introduction of the new appliance, and it is possible to perform more appropriately the appliance discrimination, the appliance management, and the like. Even when the same kind of new appliances are introduced, it is possible to discriminate the plurality of appliances from the flow rate information. Accordingly, the invention is useful as a flow rate measuring apparatus, a flow rate measuring system, a flow rate measuring method, and the like, capable of discriminating appliances on the basis of the flow rate information of gas or the like flowing in the flow path.

## Claims

1. A flow rate measuring apparatus (100) comprising:
a flow rate measuring unit (104) configured to measure a flow rate of a fluid flowing in a flow path (102);
a new event detecting unit (108) configured to detect an introduction of a new appliance (13 to 15) from an unsteady behavior of a flow rate on the basis of the flow rate measured by the flow rate measuring unit (104), wherein the new event detecting unit (100) detects the introduction of the new appliance (13 to 15) on the basis of a flow rate pattern reflecting the unsteady behavior; and
a transmission unit (110) configured to transmit a new event signal representing the introduction of the new appliance (13 to 15) detected by the new event detecting unit (108) to an external reception apparatus (20);
**characterized in that**:
the new event detecting unit (108) is configured to detect the introduction of the new appliance (13 to 15) on the basis of the number of occurrence times of the flow rate pattern reflecting the unsteady behavior, wherein the new event detecting unit (108) detects the introduction of the new appliance (13 to 15) from the unsteady behavior of the flow rate caused by a test operation of the new appliance (13 to 15) at the time of introducing the new appliance (13 to 15).

2. The flow rate measuring apparatus (100) according to claim 1, wherein the new event detecting unit (108) detects the introduction of the new appliance (13 to 15) on the basis of the number of occurrence times per unit of time the flow rate pattern reflecting the unsteady behavior.

3. The flow rate measuring apparatus (100) according to claim 1, wherein the new event detecting unit (108) uses a flow rate pattern in air purge of the new appliance (13 to 15), as the flow rate pattern reflecting the unsteady behavior.

4. The flow rate measuring apparatus (100) according to claim 1, wherein the new event detecting unit (108) detects the introduction of the new appliance (13 to 15) from the flow rate pattern reflecting the unsteady behavior and a flow rate pattern reflecting steady behavior of the flow rate of the new appliance (13 to 15).

5. A flow rate measuring system configured by connecting the flow rate measuring apparatus (100) according to any one of claims 1 to 4, to the reception apparatus (20) through a network (30).

6. The flow rate measuring apparatus according to claim 1, wherein the new event detecting unit (108) is provided with an appliance discriminating unit (116) that discriminates operations of the same kind of appliances (13 to 15) by detecting a plurality of the same flow rate information in a predetermined condition.

7. The flow rate measuring apparatus (100) according to claim 6, wherein the appliance discriminating unit (116) discriminates the operations of the same kind of appliances (13 to 15) by detecting the unsteady behavior caused by the test operation at the time of introducing the appliance (13 to 15) and the same steady behavior at the time of the normal operation as previously detected behavior subsequently from the unsteady behavior.

8. The flow rate measuring apparatus (100) according to claim 7, wherein the appliance discriminating unit (116) performs the discrimination using an unsteady flow rate pattern as the unsteady behavior.

9. The flow rate measuring apparatus (100) according to claim 7, wherein the appliance discriminating unit (116) performs the discrimination using the number of occurrence times or occurrence frequency of an unsteady flow rate pattern as the unsteady behavior.

10. The flow rate measuring apparatus (100) according to claim 8 or 9, wherein the appliance discriminating unit (116) performs the discrimination using flow rate information including any one of a flow rate value and a continuation time in the unsteady flow rate pattern.

11. The flow rate measuring apparatus (100) according to claim 7, wherein the appliance discriminating unit (116) performs the discrimination using a flow rate pattern caused by air purge at the time of a test operation as the unsteady behavior.

12. The flow rate measuring apparatus (100) according to claim 6, wherein the appliance discriminating unit (116) discriminates operations of the same kind of appliances (13 to 15) by detecting the same kind of a plurality of overlapping characteristic information.

13. The flow rate measuring apparatus (100) according to claim 12, wherein the appliance discriminating unit (116) performs the discrimination using at least one of a rising edge waveform of the flow rate pattern, a flow rate at the time of a stable operation, a falling edge waveform of the flow rate pattern, and a flow rate pattern at the time of operation control.

14. The flow rate measuring apparatus (100) according to claim 6, further comprising a communication unit that transmits plural appliance information about the introduction and operation of the same kind of appliances (13 to 15) discriminated by the appliance discriminating unit (116).

15. A flow rate measuring system comprising:
the flow rate measuring apparatus (100) according to claim 1; and
a management center apparatus (20) connected to the communication unit through a communication line.

16. A flow rate measuring method comprising steps of:
measuring, by a flow rate measuring device, a flow rate of a fluid flowing in a flow path (102);
detecting introduction of a new appliance (13 to 15) from unsteady behavior of a flow rate on the basis of the flow rate measured by the flow rate measuring device,
wherein the introduction of the new appliance (13 to 15) is detected from the unsteady behavior of the flow rate caused by a test operation of the new appliance (13 to 15) at the time of introducing the new appliance (13 to 15),
wherein the introduction of the new appliance (13 to 15) is detected on the basis of a flow rate pattern reflecting the unsteady behavior,
wherein the introduction of the new appliance (13 to 15) is detected on the basis of the number of occurence times of the flow rate pattern reflecting the unsteady behavior; and
transmitting a new event signal representing the detected introduction of the new appliance (13 to 15) to an external reception apparatus (20).

## Patentansprüche

1. Durchflussmengen-Messvorrichtung (100), die umfasst:
eine Durchflussmengen-Messeinheit (104), die konfiguriert ist, um eine Durchflussmenge eines Fluids, das in einem Strömungsweg strömt, zu messen;
eine Einheit (108) zum Detektieren eines neuen Ereignisses, die konfiguriert ist, um die Einführung eines neuen Geräts (13, 15) aus einem nicht stationären Verhalten einer Durchflussmenge anhand der durch die Durchflussmengen-Messeinheit (104) gemessenen Durchflussmenge zu detektieren, wobei die Einheit (100) zum Detektieren eines neuen Ereignisses die Einführung eines neuen Geräts (13 bis 15) anhand eines Durchflussmengenmusters, das das nicht stationäre Verhalten wiedergibt, detektiert; und
eine Sendeeinheit (110), die konfiguriert ist, um ein Signal eines neuen Ereignisses, das die Einführung des neuen Geräts (13 bis 15) repräsentiert, die durch die Einheit (108) zum Detektieren eines neuen Ereignisses detektiert wird, zu einer externen Empfangsvorrichtung (20) sendet;
**dadurch gekennzeichnet, dass**:
die Einheit (108) zum Detektieren eines neuen Ereignisses konfiguriert ist, um die Einführung des neuen Geräts (13 bis 15) anhand der Anzahl, in der das das nicht stationäre Verhalten wiedergebende Durchflussmengenmuster auftritt, zu detektieren, wobei die Einheit (108) zum Detektieren eines neuen Ereignisses die Einführung des neuen Geräts (13 bis 15) aus dem nicht stationären Verhalten der Durchflussmenge detektiert, das durch einen Testbetrieb des neuen Geräts (13, 15) während der Einführung des neuen Geräts (13, 15) verursacht wird.

2. Durchflussmengen-Messvorrichtung (100) nach Anspruch 1, wobei die Einheit (108) zum Detektieren eines neuen Ereignisses die Einführung des neuen Geräts (13 bis 15) anhand der Anzahl detektiert, in der das Durchflussmengenmuster, das das nicht stationäre Verhalten wiedergibt, pro Zeiteinheit auftritt.

3. Durchflussmengen-Messvorrichtung (100) nach Anspruch 1, wobei die Einheit (108) zum Detektieren eines neuen Ereignisses ein Durchflussmengenmuster in einer Luftspülung des neuen Geräts (13, 15) verwendet, wenn das Durchflussmengenmuster das nicht stationäre Verhalten wiedergibt.

4. Durchflussmengen-Messvorrichtung (100) nach Anspruch 1, wobei die Einheit (108) zum Detektieren eines neuen Ereignisses die Einführung des neuen Geräts (13, 15) aus dem Durchflussmengenmuster, das das nicht stationäre Verhalten wiedergibt, und aus einem Durchflussmengenmuster, das ein stationäres Verhalten der Durchflussmenge des neuen Geräts (13 bis 15) wiedergibt, detektiert.

5. Durchflussmengen-Messsystem, das durch Verbinden der Durchflussmengen-Messvorrichtung (100) nach einem der Ansprüche 1 bis 4 mit der Empfangsvorrichtung (20) über ein Netz (30) konfiguriert ist.

6. Durchflussmengen-Messvorrichtung nach Anspruch 1, wobei die Einheit (108) zum Detektieren eines neuen Ereignisses mit einer Geräteunterscheidungseinheit (116) versehen ist, die Operationen derselben Art von Geräten (13 bis 15) durch Detektieren mehrerer derselben Durchflussmengeninformationen in einem vorgegebenen Zustand unterscheidet.

7. Durchflussmengen-Messvorrichtung (100) nach Anspruch 6, wobei die Geräteunterscheidungseinheit (116) die Operationen derselben Art von Geräten (13 bis 15) durch Detektieren des nicht stationären Verhaltens, das durch den Testbetrieb während der Einführung des Geräts (13 bis 15) verursacht wird, und desselben stationären Verhaltens während des Normalbetriebs wie das früher detektierte Verhalten anschließend aus dem nicht stationären Verhalten unterscheidet.

8. Durchflussmengen-Messvorrichtung (100) nach Anspruch 7, wobei die Geräteunterscheidungseinheit (116) die Unterscheidung unter Verwendung eines nicht stationären Durchflussmengenmusters als das nicht stationäre Verhalten ausführt.

9. Durchflussmengen-Messvorrichtung (100) nach Anspruch 7, wobei die Geräteunterscheidungseinheit (116) die Unterscheidung unter Verwendung der Anzahl oder der Häufigkeit, in der ein nicht stationäres Durchflussmengenmuster als das nicht stationäre Verhalten auftritt, ausführt.

10. Durchflussmengen-Messvorrichtung (100) nach Anspruch 8 oder 9, wobei die Geräteunterscheidungseinheit (116) die Unterscheidung unter Verwendung von Durchflussmengeninformationen, die einen Durchflussmengenwert und/oder eine Fortsetzungszeit in dem nicht stationären Durchflussmengenmuster enthalten, ausführt.

11. Durchflussmengen-Messvorrichtung (100) nach Anspruch 7, wobei die Geräteunterscheidungseinheit (116) die Unterscheidung unter Verwendung eines Durchflussmengenmusters, das durch Luftspülung während eines Testbetriebs verursacht wird, als das nicht stationäre Verhalten ausführt.

12. Durchflussmengen-Messvorrichtung (100) nach Anspruch 6, wobei die Geräteunterscheidungseinheit (116) Operationen derselben Art von Geräten (13 bis 15 durch Detektieren derselben Art mehrerer überlappender charakteristischer Informationen unterscheidet.

13. Durchflussmengen-Messvorrichtung (100) nach Anspruch 12, wobei die Geräteunterscheidungseinheit (116) die Unterscheidung unter Verwendung einer Anstiegsflanken-Signalform des Durchflussmengenmusters und/oder einer Durchflussmenge zum Zeitpunkt eines stabilen Betriebs und/oder einer Abstiegsflankensignalform des Durchflussmengenmusters und/oder eines Durchflussmengenmusters zum Zeitpunkt der Betriebssteuerung ausführt.

14. Durchflussmengen-Messvorrichtung (100) nach Anspruch 6, die ferner eine Kommunikationseinheit umfasst, die mehrere Geräteinformationen über die Einführung und den Betrieb derselben Art von Geräten (13 bis 15), die durch die Geräteunterscheidungseinheit (116) unterschieden werden, sendet.

15. Durchflussmengen-Messsystem, das umfasst:
die Durchflussmengen-Messvorrichtung (100) nach Anspruch 1; und
eine Managementzentralen-Vorrichtung (20), die mit der Kommunikationseinheit über eine Kommunikationsleitung verbunden ist.

16. Durchflussmengen-Messverfahren, das die folgenden Schritte umfasst:
Messen durch die Durchflussmengen-Messeinrichtung einer Durchflussmenge eines Fluids, das in einem Strömungsweg (102) strömt;
Detektieren der Einführung eines neuen Geräts (13 bis 15) aus einem nicht stationären Verhalten einer Durchflussmenge anhand der durch die Durchflussmengen-Messeinrichtung gemessenen Durchflussmenge,
wobei die Einführung des neuen Geräts (13 bis 15) aus dem nicht stationären Verhalten der Durchflussmenge detektiert wird, das durch einen Testbetrieb des neuen Geräts (13 bis 15) während des Einführens des neuen Geräts (13 bis 15) verursacht wird,
wobei das Einführen des neuen Geräts (13 bis 15) anhand eines Durchflussmengenmusters, das das nicht stationäre Verhalten wiedergibt, detektiert wird,
wobei das Einführen des neuen Geräts (13 bis 15) anhand der Anzahl, in der das das nicht stationäre Verhalten wiedergebende Durchflussmuster auftritt, detektiert wird; und
Senden eines Signals eines neuen Ereignisses, das die detektierte Einführung des neuen Geräts (13 bis 15) repräsentiert, zu einer externen Empfangsvorrichtung (20).

## Revendications

1. Appareil (100) de mesure de débit comprenant :
une unité (104) de mesure de débit configurée pour mesurer un débit d'un fluide s'écoulant dans un chemin d'écoulement (102) ;
une unité (108) de détection de nouvel événement configurée pour détecter une mise en place d'un nouvel appareil (13 à 15) à partir d'un comportement instable d'un débit sur la base du débit mesuré par l'unité (104) de mesure de débit, où l'unité (100) de détection de nouvel événement détecte la mise en place du nouvel appareil (13 à 15) sur la base d'un modèle de débit reflétant le comportement instable ; et
une unité de transmission (110) configurée pour transmettre un signal de nouvel événement représentant la mise en place du nouvel appareil (13 à 15) détecté par l'unité (108) de détection de nouvel événement à un appareil (20) de réception externe ;
**caractérisé en ce que** :
l'unité (108) de détection de nouvel événement est configurée pour détecter la mise en place du nouvel appareil (13 à 15) sur la base du nombre de fois où le modèle de débit reflétant le comportement instable s'est produit, où l'unité (108) de détection de nouvel événement détecte la mise en place du nouvel appareil (13 à 15) à partir du comportement instable du débit provoqué par une opération d'essai du nouvel appareil (13 à 15) au moment de la mise en place du nouvel appareil (13 à 15).

2. Appareil (100) de mesure de débit selon la revendication 1, dans lequel l'unité (108) de détection de nouvel événement détecte la mise en place du nouvel appareil (13 à 15) sur la base du nombre de fois par unité de temps où le modèle de débit reflétant le comportement instable s'est produit.

3. Appareil (100) de mesure de débit selon la revendication 1, dans lequel l'unité (108) de détection de nouvel événement utilise un modèle de débit dans une purge d'air du nouvel appareil (13 à 15), en tant que modèle de débit reflétant le comportement instable.

4. Appareil (100) de mesure de débit selon la revendication 1, dans lequel l'unité (108) de détection de nouvel événement détecte la mise en place du nouvel appareil (13 à 15) à partir du modèle de débit reflétant le comportement instable et un modèle de débit reflétant un comportement stable du débit du nouvel appareil (13 à 15).

5. Système de mesure de débit configuré en reliant l'appareil (100) de mesure de débit selon l'une quelconque des revendications 1 à 4, à l'appareil de réception (20) à travers un réseau (30).

6. Appareil de mesure de débit selon la revendication 1, dans lequel l'unité (108) de détection de nouvel événement est pourvue d'une unité (116) de distinction d'appareil qui distingue des opérations du même type d'appareils (13 à 15) en détectant une pluralité des mêmes informations de débit dans une condition prédéterminée.

7. Appareil (100) de mesure de débit selon la revendication 6, dans lequel l'unité (116) de distinction d'appareil distingue les opérations du même type d'appareils (13 à 15) en détectant le comportement instable provoqué par l'opération d'essai au moment de la mise en place de l'appareil (13 à 15) et du même comportement stable au moment de l'opération normale comme comportement précédemment détecté par la suite à partir du comportement instable.

8. Appareil (100) de mesure de débit selon la revendication 7, dans lequel l'unité (116) de distinction d'appareil effectue la distinction en utilisant un modèle de débit instable en tant que comportement instable.

9. Appareil (100) de mesure de débit selon la revendication 7, dans lequel l'unité (116) de distinction d'appareil effectue la distinction en utilisant le nombre de fois ou de fréquences où un modèle de débit instable s'est produit en tant que comportement instable.

10. Appareil (100) de mesure de débit selon la revendication 8 ou 9, dans lequel l'unité (116) de distinction d'appareil effectue la distinction en utilisant des informations de débit comportant l'une quelconque d'une valeur de débit et d'une durée de continuation dans le modèle de débit instable.

11. Appareil (100) de mesure de débit selon la revendication 7, dans lequel l'unité (116) de distinction d'appareil effectue la distinction en utilisant un modèle de débit provoqué par une purge d'air au moment d'une opération d'essai en tant que comportement instable.

12. Appareil (100) de mesure de débit selon la revendication 6, dans lequel l'unité (116) de distinction d'appareil distingue des opérations du même type d'appareils (13 à 15) en détectant le même type d'une pluralité d'informations caractéristiques chevauchantes.

13. Appareil (100) de mesure de débit selon la revendication 12, dans lequel l'unité (116) de distinction d'appareil effectue la distinction en utilisant au moins l'une d'une forme d'onde à front montant du modèle de débit, d'un débit au moment d'une opération stable, d'une forme d'onde à front descendant du modèle de débit, et d'un modèle de débit au moment d'une commande de fonctionnement.

14. Appareil (100) de mesure de débit selon la revendication 6, comprenant en outre une unité de communication qui transmet plusieurs informations d'appareil concernant la mise en place et le fonctionnement du même type d'appareils (13 à 15) distingués par l'unité (116) de distinction d'appareil.

15. Système de mesure de débit comprenant :
l'appareil (100) de mesure de débit selon la revendication 1 ; et
un appareil (20) de centre de gestion relié à l'unité de communication à travers une ligne de communication.

16. Procédé de mesure de débit comprenant les étapes qui consistent :
à mesurer, par un dispositif de mesure de débit, un débit d'un fluide s'écoulant dans un chemin d'écoulement (102) ;
à détecter la mise en place d'un nouvel appareil (13 à 15) à partir d'un comportement instable d'un débit sur la base du débit mesuré par le dispositif de mesure de débit,
où la mise en place du nouvel appareil (13 à 15) est détectée à partir du comportement instable du débit provoqué par une opération d'essai du nouvel appareil (13 à 15) au moment de la mise en place du nouvel appareil (13 à 15),
où la mise en place du nouvel appareil (13 à 15) est détectée sur la base d'un modèle de débit reflétant le comportement instable,
où la mise en place du nouvel appareil (13 à 15) est détectée sur la base du nombre de fois où le modèle de débit reflétant le comportement instable s'est produit ; et
à transmettre un signal de nouvel événement représentant la mise en place détectée du nouvel appareil (13 à 15) à un appareil de réception externe (20).
